# EUROPEAN PATENT APPLICATION

(11) **EP 4 001 713 A1**
(43) Date of publication of application: **25.05.2022**
(21) Application number: 21209702.6
(22) Date of filing: 22.11.2021
(51) Int. Cl.: F16K 5/00, F24D 19/00

(54) **A RADIATOR VALVE**

(30) Priority: 24.11.2020 GB 202018423
(71) Applicant: Inovative Plumbing Solutions Ltd, Billericay, Essex CM12 0DU (GB)
(72) Inventor: FOWLS, Deborah, Maldon, CM9 6TQ (GB)
(74) Representative: Ashton, Gareth Mark

(57) **Abstract**

There is provided a radiator valve comprising a pipe, a valve member mounted inside of the pipe for controlling fluid flow through the pipe, a control element exposed on a side of the pipe for controlling the valve member, and a nut with female threads. The pipe comprises first and second opposing ends, the first end being a male connector that comprises male threads for screwing into a radiator, and the second end retaining the nut with the female threads. There is further provided a radiator comprising two of the radiator valves, and methods of removing and replacing a radiator core of a radiator.

## Description

### FIELD OF THE INVENTION

The present invention relates to a radiator valve, in particular a radiator valve to assist in the removal of a radiator from a central heating system.

### BACKGROUND OF THE INVENTION

Radiators are common components of most central heating systems, and are typically mounted to walls of buildings to radiate heat from hot water that is pumped through them.

Radiators are therefore plumbed into a hot water circuit, which can be problematic when the need arises to remove the radiator from the wall, for example to redecorate the wall behind the radiator, or to replace/maintain the main core of the radiator.

Radiators are typically connected to two fluid pipes, one that delivers fluid to the radiator and one that returns the fluid from the radiator. It is common for radiators to have a flow valve at the connection to one of the fluid pipes, which the user can control to regulate the heat output from the radiator, and a lockshield valve at the connection to the other one of the fluid pipes, which a plumber typically sets to balance the flow between the various radiators in the system when the system is first installed.

It is possible to close both the flow valve and the lockshield valve when a radiator is to be removed, in order to prevent fluid spilling out from the rest of the central heating system. However, the liquid residing inside the core of the radiator that is being removed, drains from the core of the radiator when the radiator is disconnected from the central heating system. This typically requires the plumber to hold a washing up bowl or similar to catch the dirty water exiting the core of the radiator as the radiator is removed, which is inconvenient, and can easily result in spillages.

It is therefore an object of the invention to provide an improved radiator valve.

### SUMMARY OF THE INVENTION

According to one aspect of the invention, there is provided a radiator valve comprising a pipe, a valve member mounted inside of the pipe for controlling fluid flow through the pipe, a control element exposed on a side of the pipe for controlling the valve member, and a nut with female threads, wherein the pipe comprises first and second opposing ends, the first end being a male connector that comprises male threads for screwing into a radiator, and the second end retaining the nut with the female threads.

A first one of those radiator valves can be fitted between the flow valve and the core of the radiator, and a second one of those radiator valves fitted between the core of the radiator and the lockshield valve. Then, those first and second radiator valves can be closed as well as the flow valve and the lockshield valve when the radiator is to be removed, enabling the connection between the flow valve and the first radiator valve, and the connection between the second radiator valve and the lockshield valve, to be both disconnected without any significant spillage of water.

Preferably, the pipe consists of a single length of pipe, and so can easily be integrated into radiators having short distances between the radiator core and the flow and lockshield valves. The pipe is preferably a straight pipe, again to allow easy integration into radiators. The whole outer surface of the radiator valve may be in the shape of a cylinder, except for the nut which is typically hexagonal, and except for maybe the control element which may protrude from or be inset into the side of the cylinder shape, if not flush with the shape of the cylinder. The cylinder shape may have a constant radius along the length of the cylinder, except for in the region of the male threads where the cylinder shape may have a larger or smaller radius to provide a nominal thread diameter.

The exposure of the control element on the side of the pipe makes the valve compact and easy to control. The control element may comprise a stem and the valve member may be a rotational valve connected to the stem, allowing the valve to be opened and closed by rotating the stem. The control element may comprise a lever attached to a head of the stem, to allow actuation of the valve by pushing on the lever to rotate the stem, however the stem preferably comprises a shaped head configured for rotation by a tool such as an Allen key or a screwdriver, since this is more compact. The rotational valve may for example be a ball valve.

The female connector nut may be configured to screw over threads of a male connector of another valve, for example the flow valve or the lockshield valve, to connect the radiator valve from the core of the radiator to the flow valve/lockshield valve.

The male threads may be of the same thread size as the female threads. For example, the male threads may be 1/2" BSP threads and the female threads may also be 1/2" BSP threads, allowing the radiator valve to be easily integrated into existing radiator designs.

There is further provided a radiator for connecting to first and second fluid pipes, the radiator comprising a first control valve for controlling fluid flow via the first pipe, a second control valve for controlling fluid flow via the second pipe, and a core portion between the first and second control valves for radiating heat from the fluid, further comprising a first one of the radiator valves between the first control valve and the core portion, and a second one of the radiator valves between the core portion and the second control valve. The first control valve may be a flow valve, such as a thermostatic valve, and the second control valve may be a lockshield valve.

The first end of the first radiator valve may be screwed into the core portion, and the first end of the second radiator valve may also be screwed into the core portion. The first control valve may be screwed into the nut of the first radiator valve, and the second control valve may be screwed into the nut of the second radiator valve. Thus, the first radiator valve may directly connect the first control valve to the core portion of the radiator, and the second radiator valve may directly connect the core portion of the radiator to the second control valve.

There is further provided a method for removing the radiator core of the radiator, wherein the method comprises moving each of the first and second control valves and the first and second radiator valves to a closed position that blocks fluid flow through the valves, unscrewing the nut at the second end of the first radiator valve from the first control valve, unscrewing the nut at the second end of the second radiator valve from the second control valve, and removing the radiator core and the first and second radiator valves from the first and second valves and from a radiator support provided on a wall. This provides a very easy procedure for a user to follow when removing a radiator from a wall, without any significant spillage of liquid.

There is further provided a method for replacing the radiator core of the radiator, the radiator core being filled with a liquid that is retained inside the radiator core by the first and second radiator valves in a closed position, wherein the method comprises attaching the radiator core with the first and second radiator valves to a radiator support on a wall, screwing the nut at the second end of the first radiator valve onto the first control valve, screwing the nut at the second end of the second radiator valve onto the second control valve, and moving each of the first and second control valves and the first and second radiator valves to an open position that allows fluid flow through the valves. The radiator system can therefore be returned to normal operation without introducing a large volume of air into the radiator system.

Optionally, the method may further comprise removing some of the liquid from the radiator core by opening the first or second radiator valves, replacing the removed liquid with a liquid additive, and closing the opened radiator valve, prior to the step of attaching the radiator core with the first and second radiator valves to the radiator support on the wall. Liquid additives are commonly added to radiator systems to help maintain the radiator system, for example by inhibiting corrosion, and the first and second radiator valves provide an effective method of introducing a liquid additive into the system when the radiator is removed, without any need to open up another part of the radiator system.

The core portion typically comprises a plurality of passageways for fluid and a plurality of fins extending from the plurality of passageways to radiate heat from the fluid. The terms "radiator core" and "core portion" are equivalent and are used interchangeably herein.

### DETAILED DESCRIPTION

Embodiments of the invention will now be described by way of non-limiting example only and with reference to the accompanying drawings, in which:
Fig. 1 shows a schematic perspective diagram of a radiator valve according to an embodiment of the invention
Fig. 2 shows another schematic perspective diagram of the radiator valve of Fig. 1;
Fig. 3 shows a schematic cross-sectional diagram taken along line XS1 of Fig. 2; and
Fig 4 shows a schematic diagram of a radiator incorporating two of the radiator valves of Fig 1.

The figures are not to scale, and same or similar reference signs denote same or similar features.

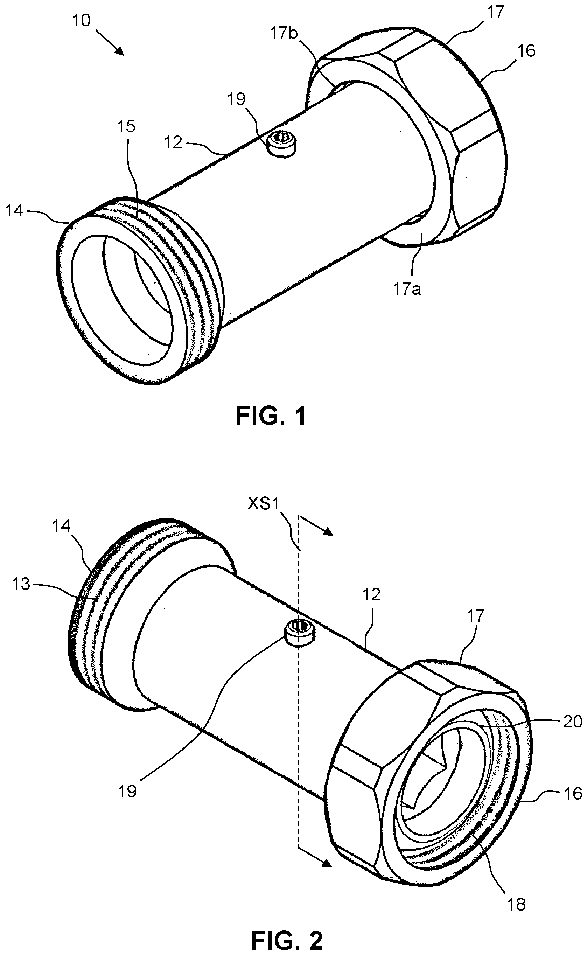

The schematic diagrams of Fig. 1 and Fig. 2 show a radiator valve 10, comprising a cylindrical pipe 12 having a first end 14 and a second end 16 that is opposite from the first end 14. Fig. 1 shows the radiator valve when viewed from the end 14, whereas Fig. 2 shows the radiator valve when viewed from the second end 16.

The cylindrical pipe 12 may be straight and have a constant diameter between the first and second ends 14 and 16. The first end 14 may have an enlarged diameter to provide male threads 13 of 1/2" BSP, and the second end 16 may have an enlarged diameter boss 20. The nut 17 comprises female threads 18 that are also of 1/2" BSP inside the nut, and may comprise a partial closure 17a at an end of the nut that faces toward the first end 14. The partial closure 17a reduces the diameter of an opening 17b at the end of the nut to less than the diameter of the female threads 18 inside the nut. The boss 20 may have an external diameter of a size that is in between the size of the diameter of the opening 17b and the size of the diameter of the female threads 18.

The partial closure 17a and the boss 20 may therefore abut against one another inside of the nut 17 to retain the nut on the second end 16 of the pipe, with the boss 20 fully inside the nut 17. However, other ways of retaining the nut at the second end of the pipe could also be implemented in alternate embodiments.

The boss 20 may have a length that is short enough to leave the majority of the length of the female threads 18 exposed inside the nut and available for accepting male threads, the lengths being in a same direction as the axial length of the pipe at the second end.

The radiator valve 10 also comprises a control element, of which a head 19 slightly protrudes from the side of the pipe 12. The head 19 is shaped to receive a tool for actuating the control element, and in this embodiment the head is shaped with a socket to receive an Allen key tool, although it could alternatively be shaped to fit other tools. For example, the head 19 could be shaped with a slot to receive a flat headed screwdriver. It would also be possible to fix a lever to the head 19, so the control element could be turned by pushing on the lever.

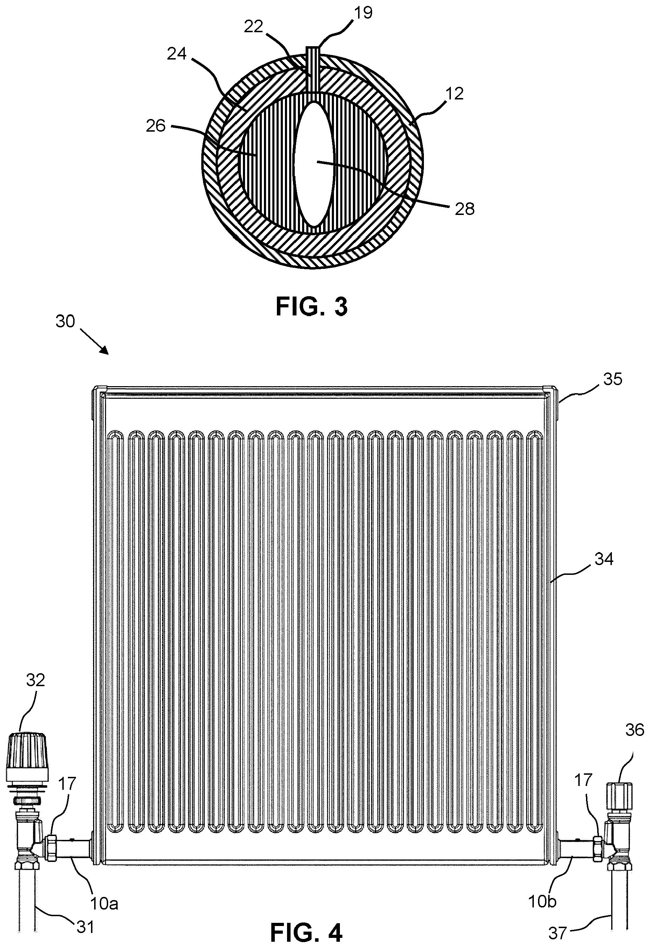

The schematic diagram of Fig. 3 shows a cross-sectional view of the radiator valve 10, taken looking in along the line XS1 marked in Fig. 1. Fig. 3 illustrates the internal details of the radiator valve so it can be appreciated how the valve is opened and closed. As shown, the control element comprises the head 19 and a stem 22 that is attached to or integrally formed with the head 19. The stem 22 is attached or integrally formed with a valve member in the form of a spherical ball 26 at an opposite end of the stem from the head 19.. Accordingly, the valve may be described as a ball valve.

The spherical ball 26 has a circular hole 28 passing through it, and the circular hole 28 appears elliptical in Fig. 3 since the ball 26 is shown at a rotation where the axis of the hole is around 45° to the axis of the pipe. The spherical ball 26 is mounted within a valve seating 24, which is mounted inside the pipe 12.

In use, the head 19 is rotated using a tool, to rotate the spherical ball 26 and either align the axis of the hole 28 with the axis of the pipe 12 to fully open the valve, or to align the axis of the hole 28 at 90° to the axis of the pipe 12 to fully close the valve.

Two of the radiator valves 10 may be incorporated into a radiator, as will now be described with reference to Fig. 4. Fig. 4 shows a radiator 30, comprising a flow valve 32, a first radiator valve 10a, a core portion 34, a second radiator valve 10b, and a lockshield valve 36. The radiator is connected to an incoming pipe 31, which supplies hot water to the radiator, and an outgoing pipe 37, which returns the water from the radiator towards a source of heat. The first and second radiator valves 10a and 10b are both the same as the radiator valve 10 described further above. The radiator may also comprise a radiator support 35 for supporting the radiator against a wall.

The flow valve 32 may be connected directly to the incoming pipe 31 and connected directly to the first radiator valve 10a, to control fluid flow between the incoming pipe 31 and the first radiator valve 10a. Accordingly, the flow valve 32 can be opened when the radiator is required to radiate more heat, and closed when less heat is required. The flow valve 32 is a thermostatic valve, however could be manually controlled in alternate embodiments.

The first radiator valve 10a may be connected directly to the flow valve 32 and connected directly to the radiator core 34. The first end of the radiator valve 10a with the male screw threads is screwed into female screw threads of the radiator core 34, and the female threads of the nut 17 at the second end of the radiator valve 10a are screwed over male threads at an outlet of the flow valve, to receive hot water from the flow valve. The first radiator valve 10a is left in the fully on position during normal radiator operation.

The radiator core 34 may be directly connected to the first radiator valve 10a and directly connected to the second radiator valve 10b, to allow the hot water to flow through the radiator. The radiator core 34 comprises a plurality of passageways for carrying the hot water and a plurality of fins extending from the plurality of passageways to radiate heat from the hot water. The radiator core comprises an inlet and an outlet, the inlet and the outlet both comprising female screw threads that receive male screw threads of the first and second radiator valves 10a and 10b.

The second radiator valve 10b may be connected directly to the radiator core and connected directly to the lockshield valve 36. The first end of the radiator valve 10b with the male screw threads is screwed into the female screw threads of the outlet of the radiator core 34, and the female threads of the nut 17 at the second end of the radiator valve 10b are screwed over male threads at an inlet of the lockshield valve, to send water from the radiator core to the lockshield valve. The second radiator valve 10b is left in the fully on position during normal radiator operation.

The lockshield valve 36 may be connected directly to the second radiator valve 10b and connected directly to the outgoing pipe 37, to control fluid flow between the second radiator valve 10b and the outgoing pipe 37. Accordingly, the lockshield valve 36 may be set by a plumber during installation to balance the water flow between this radiator and the other radiators connected to the same system.

Whilst the hot water flows from the pipe 31 to the pipe 37 in this embodiment, the direction of flow of the hot water through the radiator could be reversed and flow from pipe 37 to pipe 31 instead if desired.

Whenever there is a need to remove the radiator core 34 from the system, for example to decorate the wall behind it, the flow valve 32 and the lockshield valve 36 can be fully closed to isolate the radiator from the rest of the radiator system and block any further fluid flow through the radiator. The first and second radiator valves 10a and 10b can also be both closed, to prevent the water inside of the radiator core from flowing out. Then, the nuts 17 of the first and second radiator valves can both be unscrewed, allowing the radiator core 34 and the first and second radiator valves 10a and 10b to be removed from the radiator support 35 and the wall with minimal loss of water.

The radiator core can later be replaced on the radiator support 35 and the nuts 17 screwed back onto the flow valve 32 and the lockshield valve 36, and then the valves 32, 10a, 10b and 36 opened to allow normal operation to resume. Since all the water inside the radiator is retained instead of being drained and replaced with air, much less air is introduced into the radiator system when operation is restarted, improving the operation of the overall radiator system. Optionally, some of the water inside the radiator can be replaced with a liquid additive via the first or second radiator valve, prior to replacing the radiator core on the support 35.

Many other variations of the described embodiments falling within the scope of the invention will be apparent to those skilled in the art.

## Claims

1. A radiator valve comprising a pipe, a valve member mounted inside of the pipe for controlling fluid flow through the pipe, a control element exposed on a side of the pipe for controlling the valve member, and a nut with female threads, wherein the pipe comprises first and second opposing ends, the first end being a male connector that comprises male threads for screwing into a radiator, and the second end retaining the nut with the female threads.

2. The radiator valve of claim 1, where the pipe consists of a single length of pipe.

3. The radiator valve of claim 1 or 2, wherein the pipe is a straight pipe.

4. The radiator valve of claim 1, 2 or 3, wherein the control element comprises a stem and the valve member is a rotational valve connected to the stem, wherein the control element preferably comprises a lever attached to a head of the stem, and the stem preferably comprises a shaped head configured for actuation by a tool.

5. The radiator valve of claim 4, wherein the rotational valve is a ball valve.

6. The radiator valve of any preceding claim, wherein the nut is configured to screw over threads of a male connector of another valve.

7. A radiator for connecting to first and second fluid pipes, the radiator comprising a first control valve for controlling fluid flow via the first pipe, a second control valve for controlling fluid flow via the second pipe, and a core portion between the first and second control valves for radiating heat from the fluid, further comprising a first radiator valve according to any preceding claim between the first control valve and the core portion, and a second radiator valve according to any preceding claim between the core portion and the second control valve.

8. The radiator of claim 7, wherein the first end of the first radiator valve is screwed into the core portion, and wherein the first end of the second radiator valve is also screwed into the core portion.

9. The radiator of claim 7 or 8, wherein the first control valve is screwed into the nut of the first radiator valve and the second control valve is screwed into the nut of the second radiator valve.

10. The radiator of claim 7, 8 or 9, wherein the first control valve is a flow valve and the second control valve is a lockshield valve.

11. The radiator of claim 10, wherein the flow valve is a thermostatic valve.

12. The radiator of any one of claims 7 to 11, wherein the core portion comprises a plurality of passageways for fluid and a plurality of fins extending from the plurality of passageways to radiate heat from the fluid.

13. A method for removing a radiator core of a radiator, the radiator being in accordance with claim 9 or any one of claims 10 to 12 when appended to at least claim 9, wherein the method comprises moving each of the first and second control valves and the first and second radiator valves to a closed position that blocks fluid flow through the valves, unscrewing the nut at the second end of the first radiator valve from the first control valve, unscrewing the nut at the second end of the second radiator valve from the second control valve, and removing the radiator core and the first and second radiator valves from the first and second control valves and from a radiator support provided on a wall.

14. A method for replacing a radiator core of a radiator, the radiator being in accordance with claim 9 or any one of claims 10 to 12 when appended to at least claim 9, the radiator core being filled with a liquid that is retained inside the radiator core by the first and second radiator valves in a closed position, wherein the method comprises attaching the radiator core with the first and second radiator valves to a radiator support on a wall, screwing the nut at the second end of the first radiator valve onto the first control valve, screwing the nut at the second end of the second radiator valve onto the second control valve, and moving each of the first and second control valves and the first and second radiator valves to an open position that allows fluid flow through the valves.

15. The method of claim 14, further comprising removing some of the liquid from the radiator core by opening the first or second radiator valves, replacing the removed liquid with a liquid additive, and closing the opened radiator valve, prior to the step of attaching the radiator core with the first and second radiator valves to the radiator support on the wall.
